# EUROPÄISCHE PATENTSCHRIFT

(11) **EP 1 046 943 B1**
(45) Veröffentlichungstag und Bekanntmachung des Hinweises auf die Patenterteilung: **14.08.2002**
(21) Anmeldenummer: 99107807.2
(22) Anmeldetag: 20.04.1999
(51) Int. Cl.: G02C 11/06, H04R 25/00

(54) **Hörhilfe**
Listening assistance device
Assistance d'audition

(43) Veröffentlichungstag der Anmeldung: 25.10.2000
(73) Patentinhaber: FIRMA ERIKA KÖCHLER, CH-8833 Samstagern (CH)
(72) Erfinder: Meyer, Serge Eduard Hektor, 8917 Oberlunkhofen (CH)
(74) Vertreter: Blum, Rudolf Emil Ernst

(56) Entgegenhaltungen:
- EP-A- 0 579 238
- DE-U- 1 724 439
- DE-U- 9 314 924
- DE-U- 9 404 882
- GB-A- 1 012 633
- GB-A- 1 089 238

## Beschreibung

Die Erfindung betrifft eine Hörhilfe gemäss Anspruch 1, ein Verfahren zur Herstellung einer solchen sowie einen Bügelteil zur Durchführung des Verfahrens.

Es sind im Ohr zu tragende Hörgeräte in Kombination mit Brillen bekannt, wobei diese Hörgeräte in klassischer Weise auf das zu versorgende Ohr angepasst werden, indem die Form des in das Ohr ragenden Teiles an den Hörkanal angepasst wird und den Gehörgang akustisch abschliessen und indem die Eigenschaften der Schallverstärkung des Hörgerätes (akustische Verstärkung, Frequenzgang, Dynamik) auf den Hörverlust des Benutzers des Hörgerätes angepasst sind. Dies bedingt bekannterweise zeitaufwendigen und kostspieligen Arbeitsaufwand eines Ohrenarztes und/oder Hörgeräteakustikers mit der hörbehinderten Person.

Es sind ferner auch übliche Kopfhörer in Kombination mit einer Brille bekannt, so aus EP-A-0 579 238.

Bei vielen Personen stellt sich indes altersbedingt ab ca. 40 Jahren ein leicht zunehmender Hörverlust ein, der noch keiner Untersuchung durch einen Ohrenarzt bzw. keines Einsatzes eines klassischen Hörgerätes bedarf. Dieser Hörverlust macht sich besonders im Gespräch durch verminderte Sprachverständlichkeit bemerkbar. Daher wäre es oft wünschenswert diesen schwach hörgeschädigten Personen eine Verbesserung des Hörvermögens auf einfache und kostengünstige Weise zu ermöglichen, wobei dadurch das Erscheinungsbild der Person nicht derart verändert werden sollte, dass die Person als Hörgeräteträger erkannt und für schwerhörig gehalten wird.

Aufgabe der Erfindung ist es daher eine einfache und kostengünstige Hörhilfe zu schaffen, welche problemlos und unauffällig zu tragen ist und insbesondere der verminderten Sprachverständlichkeit entgegenwirkt.

Diese Aufgabe wird durch die Merkmale des Anspruchs 1 gelöst.

Dadurch, dass ein Hörmodul in Kombination mit einer Brille derart vorgesehen ist, dass dieses Hörmodul die Abstützung der Brille im Ohr bildet, ergibt sich ein unauffälliges, nicht an Hörgeräte erinnerndes Aussehen sowie ein einfach einzusetzendes Gerät. Durch den in den Gehörgang hineinreichenden Teil des Hörmoduls, welcher indes diesen akustisch nicht vollständig zu schliessen und somit nicht individuell angefertigt zu werden braucht, ergibt sich eine direkte Schalleinkopplung und eine Einkopplung via Hörmodul in das Ohr bei kostengünstiger Herstellung. Ferner ergibt das nicht völlige Abschliessen des Gehörganges einen angenehmen Tragekomfort ohne Druckgefühl.

Die Hörhilfe weist abgewinkelte Bügel auf, was eine besonders gute Brillenpositionierung, einen angenehmen Tragekomfort ergibt und ein unauffälliges Tragen ergibt.

Weiter ist es bevorzugt, dass das Hörmodul am Bügelende einstellbar angeordnet ist; bei einer asymmetrischen Anordnung der Ausformung.zur Längsachse des Hörmoduls wird dazu eine Drehung um dessen Längsachse bevorzugt. Dies ermöglicht eine individuelle Positionierung des Schallausganges des Hörmoduls an den Hörkanal für minimale akustische Rückkopplung und bietet ferner eine besonders einfache Befestigung des Hörmoduls am Bügel mittels eines dort ausgebildeten Ringes.

Die Erfindung bezweckt ferner die möglichst einfache Bereitstellung einer Hörhilfe. Dies wird mit dem Verfahren gemäss Anspruch 11 erreicht. Ferner soll ein Bügelteil zu dessen Durchführung geschaffen werden. Dieses ist durch die Merkmale des Anspruchs 12 gekennzeichnet.

Im folgenden werden Ausführungsbeispiele der Erfindung anhand der Zeichnungen näher erläutert. Dabei zeigt
Figur 1 eine schematische schaubildliche Darstellung einer Hörhilfe gemäss der Erfindung; und
Figur 2 eine Seitenansicht der Hörhilfe von Figur 1.

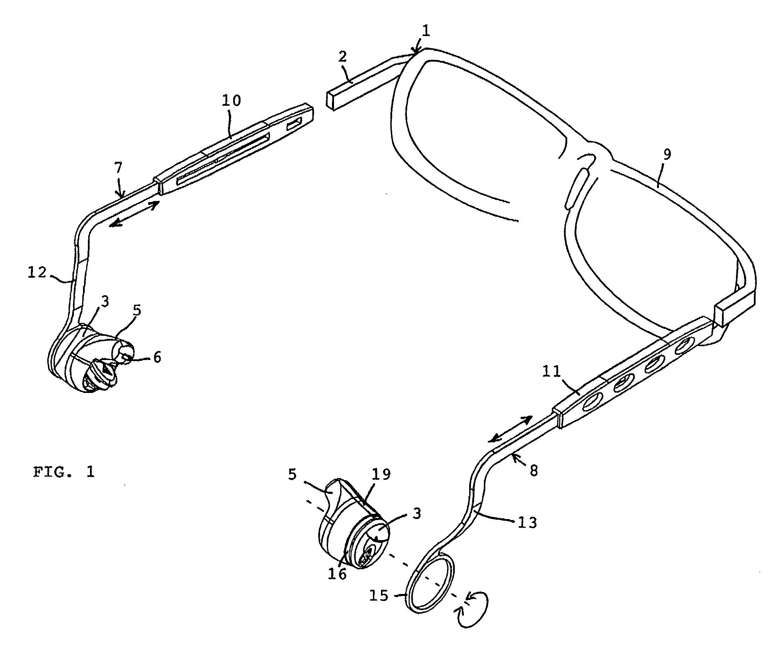

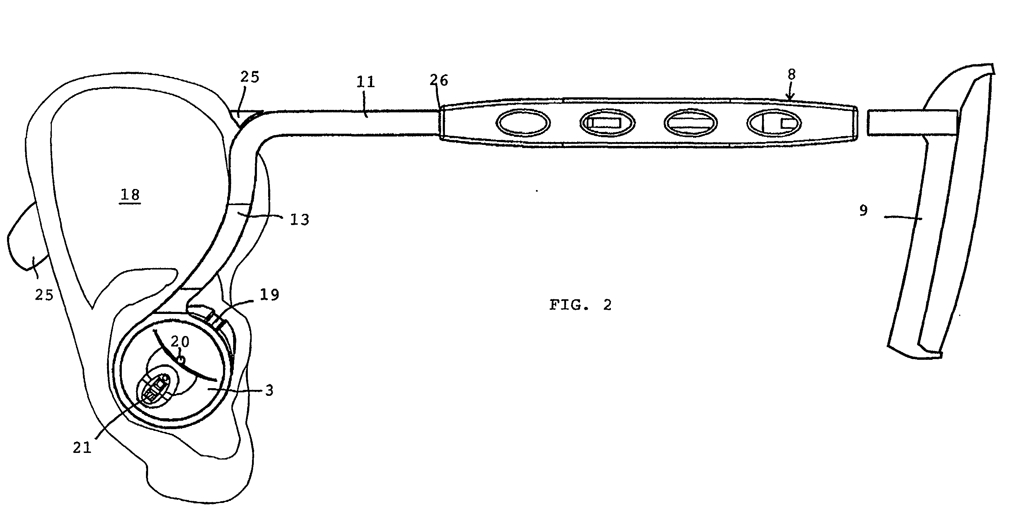

Die Figuren 1 und 2 zeigen eine Ausführungsform der Hörhilfe 1 in schaubildlicher Darstellung bzw. Seitenansicht. Die Ausführungsform weist ein nur teilweise dargestelltes Brillengestell 2 auf, welches eine Gläserfassung 9 und Bügel 7 und 8 aufweist. Am ohrenseitigen Ende jedes Bügels ist ein Hörmodul 3 angeordnet, wobei in der Figur 1 das linke Hörmodul im Bügel eingesetzt dargestellt ist und das in der Figur rechte Hörmodul 3 vom Bügel getrennt dargestellt ist. Das Hörmodul 3 bildet die Abstützung des Brillengestells am Ohr, wobei das Hörmodul 3 zur Abstützung im Ohr ausgestaltet ist, wie dies in Figur 2 ersichtlich ist.

Das Hörmodul ist in grundsätzlich bekannter Weise aufgebaut und umfasst insbesondere ein Mikrofon, dessen Schalleintrittsöffnung 20 in Figur 2 ersichtlich ist, eine elektronische Verstärkerschaltung, an deren Eingang das Mikrofon angeschlossen ist, sowie einen Schallwandler, der die verstärkten Mikrofonsignale wiederum in akustische Signale wandelt. Die Austrittsöffnung 6 für die Schallsignale ist an einer Ausformung 5 des Hörmoduls vorgesehen, welche in den Gehörgang hineinragt, wenn das Hörmodul 3 im Ohr sitzt. In Figur 1 ist ferner beim linken Hörmodul 3 ein Batteriefach in geöffneter Stellung gezeigt, in welchem Batteriefach eine Batterie zur Speisung des elektrischen Verstärkers angeordnet ist.

Die Ausformung 5 hat eine fest vorgegebene Geometrie und ist nicht an die individuelle Form des Gehörganges des Benutzers angepasst. Die Ausbildung der Ausformung 5 ist ferner dergestalt, dass sie den Gehörgang eines erwachsenen Trägers nicht verschliesst und somit diesen gegenüber der Aussenwelt nicht völlig abschliesst. Dies ermöglicht einerseits die Herstellung des Hörmoduls 3 mit einem fest vorgegebenen Standardgehäuse für alle Benutzer, das sich industriell fertigen lässt und damit eine kostengünstige Herstellung ermöglicht. Ferner trägt dies dem Umstand Rechnung, dass es sich bei dem Hörmodul nur um eine Hilfseinrichtung für das nur leicht reduzierte, aber ansonsten intakte Hörvermögen des Trägers der Hörhilfe handelt. Ferner erhöht das Nichtabschliessen des Gehörganges den Tragekomfort deutlich. Bei der dargestellten bevorzugten Ausführungsart ist die Ausformung 5 nach vorne hin (zur Schallaustrittsöffnung 6 hin) konisch ausgestaltet, um ein völliges Verschliessen des Gehörganges zu vermeiden. Ferner ist es bevorzugt, wenn an der Gehäuseaussenseite des Hörmoduls ein Kanal 19 ausgebildet ist, der ebenfalls sicherstellt, dass der Gehörgang nicht verschlossen wird. Beide Massnahmen ermöglichen den Eintritt von Direktschall in das Ohr und vermeiden zudem den unangenehmen Ohrdruck.

Beim bevorzugten Ausführungsbeispiel sind die Bügel 7 und 8 derart ausgestaltet, dass sich diese von der Gläserfassung 9 ausgehend zunächst in gerader Richtung nach hinten erstrecken, wobei diese im wesentlichen geraden Abschnitte in den Figuren mit 10 und 11 bezeichnet sind. An die geraden Abschnitte schliessen sich dazu abgewinkelte Abschnitte 12 und 13 des jeweiligen Bügels an, welche zur Ohrmuschel hin nach unten abgewinkelt sind. Am Ende des abgewinkelten Abschnittes ist jeweils der Hörmodul 3 angeordnet. Diese bevorzugte Ausgestaltung ergibt einerseits einen korrekten Sitz der Brille bzw. eine korrekte Stellung der Gläserfassung 9, was für die optischen Eigenschaften der Brille vorteilhaft ist, wenn es sich bei den verwendeten Gläsern um Korrekturgläser handelt. Andererseits hat sich gezeigt, dass durch diese Ausgestaltung ein guter Tragekomfort der Brille bzw. der Bügel am Ohr erzielt werden kann.

Zur individuellen Einstellung der Hörhilfe sind die Bügel vorzugsweise so ausgestaltet, dass sie in ihrer Länge verstellt werden können. Dazu kann im Bereich der geraden Bügelabschnitte 10 und 11 eine zweiteilige Ausgestaltung dieser Abschnitte vorgesehen sein, welche ein teleskopartiges Auseinanderziehen oder Zusammenschieben des Bügels erlaubt, was in Figur 1 mit einem Pfeil angedeutet ist. Vorzugsweise ist auch eine Rastung vorgesehen, welche das Einrasten des Bügels in vorgegebenen Längenpositionen erlaubt. Weiter ist bevorzugterweise eine Einstellmöglichkeit für die Lage des Hörmoduls 3 am Bügel vorgesehen. In der gezeigten bevorzugten Ausführungsform ist das Gehäuse des Hörmoduls 3 im wesentlichen zylindrisch ausgeführt und derart am Bügel befestigt, dass dieser an seinem Ende mit einem Ring 15 ausgestattet ist, in welchen das Hörmodul 3 mit einer von Wülsten begrenzten Nut 16 derart befestigt werden kann, dass sich eine Klemmbefestigung des Hörmoduls 3 im Ring 15 ergibt. Bei dieser Ausführung ergibt sich eine einfache Verstellmöglichkeit durch ein Drehen des zylindrischen Hörmoduls 3 um seine Längsachse im Ring 15, was in Figur 1 ebenfalls mit einem Pfeil angedeutet ist. Durch die bevorzugte asymmetrische Anordnung der Ausformung 5 zur Längsachse des Gehäuses des Hörmoduls 3 kann durch die Drehung des Hörmoduls 3 auch die Stellung der Ausformung 5 zum Gehörkanal verändert werden. Es ergibt sich dadurch eine einfache Einstellmöglichkeit in eine Position, bei welcher die Ausformung 5 auf nicht störende Weise in den Gehörkanal des Benützers der Hörhilfe hineinragt.

Bei der Hörhilfe wird es weiterhin bevorzugt, wenn das Hörmodul 3 eine fix vorgegebene akustische Verstärkung aufweist. Das Hörmodul wird lediglich durch einen Schalter 21 vom Benützer ein- oder ausgeschaltet, wenn die Funktion als Hörhilfe benötigt bzw. nicht mehr benötigt wird. Beide mit einem Hörmodul versehenen Ohren erfahren dabei die gleiche Schallverstärkung und dadurch keine Änderung des gewohnten Höreindruckes. Die Verstärkung des Hörmoduls 3 kann dabei auf einen bei der Herstellung fix vorgegebenen Wert eingestellt sein, welcher z.B. 10 bis 20 db betragen kann, was für einen durchschnittlichen leichten Hörverlust genügt. Allenfalls können verschiedene Hörmodule 3 erhältlich sein, welche verschiedene fixe Verstärkungsgrade aufweisen und welche durch Austausch am Bügel der Hörhilfe 1 befestigt werden können; auch Hörmodule mit durch Potentiometer einstellbarer Verstärkung sind einsetzbar.

Eine Hörhilfe gemäss der Erfindung wird bevorzugterweise dadurch bereitgestellt, dass an eine Gläserfassung 9 ein Bügel oder, wenn die Gläserfassung bereits mit einem teilweisen Bügel versehen ist, ein Bügelteil (Adapter) angeordnet wird, welches das Hörmodul aufnimmt. Anstelle des Bügelteils mit dem Hörmodul kann indes auch ein normal geformter Bügelteil an der Gläserfassung angeordnet werden, so dass die Gläserfassung 9 der Hörhilfe auch als konventionelle Brille getragen werden kann. In Figur 2 ist das mit dem Bügelteil 25 angedeutet, welches alternativ zu dem dargestellten Bügelteil mit Hörmodul an der Gläserfassung befestigt werden kann. Die Gläserfassung 9 kann dabei bereits mit einem Bügelteil versehen sein, welches sich z.B. bis zur Stelle 26 erstreckt. In dieses Bügelteil wird dann jeweils entweder das konventionelle Bügelteil 25 eingeschoben oder der mit dem Hörmodul 3 versehene Adapter zur Bereitstellung der Hörhilfe. Die Gläserfassung kann mit Gläsern mit optischer Korrektur oder ohne eine solche Korrektur versehen sein, insbesondere aber mit Gläsern zur Bildung einer Lesebrille, z.B. mit mehreren vorgegebenen Dioptriewerten, z.B. fünf Dioptriewerten von 1 bis 3 Dioptrien.

Die Hörhilfe ist vorzugsweise, wie gezeigt, mit zwei Hörmodulen ausgerüstet. Beidohriges Hören ermöglicht bestes Richtungshören und damit verbesserte Sprachverständlichkeit in lärmiger Umgebung. Beide Ohren werden mit gleicher akustischer Verstärkung und mit gleichem Frequenzgang versorgt, so dass die Selektivität des beidohrigen, stereophonen Hörens erhalten bleibt. Bevorzugt werden durch die Hörmodule die Frequenzen des Sprachbereichs verstärkt und damit die Sprachverständlichkeit in lärmiger Umgebung verbessert. Bevorzugterweise ist ferner die Dynamik linear. Es ist aber auch möglich, nur auf einer Seite ein Hörmodul 3 einzusetzen und auf der anderen Seite den konventionellen Bügelteil 25 einzusetzen. Ferner ist es auch möglich, anstelle des Hörmoduls 3 im Bügel einen entsprechenden Knopf anzuordnen, der eine Abstützung des Gestells in der Ohrmuschel erlaubt, ohne die Schallverstärkungsfunktion aufzuweisen. In diesem Fall kann durch Wegnahme des Hörmoduls 3 und Einsetzen eines entsprechenden Knopfes in den Ring 15 die Brille als normale Brille ohne Hörhilfefunktion, aber mit den gezeigten abgewinkelten Bügeln getragen werden.

## Patentansprüche

1. Hörhilfe (1) mit mindestens einem an einem Brillengestell (2) angeordneten Hörmodul (3), in welchem ein Mikrofon, ein Verstärker und ein Wandler, der die verstärkten Mikrofonsignale in akustische Signale wandelt, eingebaut sind, **dadurch gekennzeichnet, dass** das Hörmodul derart ausgebildet ist, dass es eine Abstützung der Brille im Ohr bildet und mit einer nicht individuell angefertigten, in den Gehörgang ragenden, diesen akustisch nicht vollständig abschliessenden Gehäuseausformung (5) versehen ist, welche eine Schallaustrittsöffnung (6) aufweist, und dass das Brillengestell (2) mindestens einen Bügel (7, 8) mit einem von der Gläserfassung (9) im wesentlichen geradlinig nach hinten verlaufenden ersten Abschnitt (10, 11) und einem vom ersten Abschnitt abgewinkelt nach unten verlaufenden zweiten Abschnitt (12, 13) aufweist, welcher an seinem freien Ende das Hörmodul (3) trägt.

2. Hörhilfe (1) nach Anspruch 1, **dadurch gekennzeichnet, dass** die Ausformung (5) mindestens teilweise eine konische Gestalt aufweist.

3. Hörhilfe (1) nach Anspruch 1 oder 2, **dadurch gekennzeichnet, dass** das Hörmodul ein Mittel, insbesondere einen Kanal (19), zur Sicherstellung einer direkten Schallverbindung in das Ohr aufweist.

4. Hörhilfe nach einem der Ansprüche 1 bis 3, **dadurch gekennzeichnet, dass** das Brillengestell Bügel (7,8) mit einer Längenverstellung aufweist.

5. Hörhilfe nach einem der Ansprüche 1 bis 4, **dadurch gekennzeichnet, dass** das Hörmodul (3) ein im wesentlichen zylindrisches Gehäuse aufweist, an welchem die Ausformung (5) asymmetrisch zu dessen Längsachse angeordnet ist.

6. Hörhilfe nach einem der Ansprüche 1 bis 5, **dadurch gekennzeichnet, dass** das Hörmodul am Brillengestell lageverstellbar angeordnet ist.

7. Hörhilfe nach Anspruch 5 und 6, **dadurch gekennzeichnet, dass** das Hörmodul um seine Längsachse drehbar ist.

8. Hörhilfe nach einem der Ansprüche 1 bis 7, **dadurch gekennzeichnet, dass** das Hörmodul eine fix eingestellte Verstärkung, vorzugsweise im Bereich von 10 bis 20 db, aufweist.

9. Hörhilfe nach einem der Ansprüche 1 bis 8, **dadurch gekennzeichnet, dass** das Hörmodul einen im wesentlichen sprachspezifischen Frequenzgang und eine lineare Dynamik aufweist.

10. Verfahren zur Herstellung einer Hörhilfe, **dadurch gekennzeichnet, dass** am Bügel oder an einem Bügelteil eines Brillengestells ein Hörmodul mit eingebautem Mikrofon, Verstärker und Schallwandler derart angeordnet ist, dass er die Abstützung des Bügels oder Bügelteils im Ohr bildet, wobei das Hörmodul eine nicht individuell angefertigte, in den Gehörgang ragende, diesen akustisch nicht vollständig abschliessende Gehäuseausformung aufweist, und dass der Bügel oder das Bügelteil an einer mit Brillengläsern versehenen oder zur Aufnahme von Brillengläsern bestimmten Gläserfassung befestigt wird oder dass der Bügelteil an einem an der Gläserfassung angeordneten zweiten Bügelteil befestigt wird, wobei der Bügel (7, 8) oder der Bügelteil mit einem von der Gläserfassung (9) im wesentlichen geradlinig nach hinten verlaufenden ersten Abschnitt (10, 11) und einem vom ersten Abschnitt abgewinkelt nach unten verlaufenden zweiten Abschnitt (12, 13) versehen ist, welcher jeweils an seinem freien Ende das Hörmodul (3) trägt.

11. Bügel oder Bügelteil zur Durchführung des Verfahrens nach Anspruch 10, **gekennzeichnet durch** ein am Bügel oder Bügelteil angeordnetes Hörmodul mit eingebautem Mikrofon, Verstärker und Schallwandler, das zur Abstützung des Bügels im Ohr ausgestaltet und mit einer zum Hineinragen in den Gehörgang bestimmten Gehäuseausformung versehen ist, wobei der Bügel (7, 8) oder der Bügelteil mit einem von der Gläserfassung (9) im wesentlichen geradlinig nach hinten verlaufenden ersten Abschnitt (10, 11) und einem vom ersten Abschnitt abgewinkelt nach unten verlaufenden zweiten Abschnitt (12, 13) versehen ist, welcher jeweils an seinem freien Ende das Hörmodul (3) trägt.

## Claims

1. Listening aid device (1) with at least one hearing module (3) enclosing a microphone, an amplifier and an acoustics transducer which converts the amplified microphone signals into acoustical signals, arranged on a spectacle frame (2), **characterized in that** the hearing module is designed in such a manner that it forms a support of the spectacles in the ear and comprizes a housing projection (5) that is not individually custom-made which projects into the auditory channel without entirely closing it acoustically and which includes a sound outlet opening (6), and **in that** the spectacle frame (2) comprises at least one spectacle temple (7, 8) with a first portion (10, 11) extending from the frame (9) of the lenses substantially rectilinearly towards the back, and a second portion (12, 13) angled downwards from the first portion, which carries the hearing module (3) at its free end.

2. Listening aid device (1) according to claim 1, **characterized in that** the projection (5) is at least in part conical.

3. Listening aid device (1) according to claim 1 or 2, **characterized in that** the hearing module comprises a means, specifically a channel (19) for ensuring a direct sound connection into the ear.

4. Listening aid device according to one of the claims 1 to 3, **characterized in that** the spectacle frame comprises temples (7, 8) adjustable in length.

5. Listening aid device according to one of the claims 1 to 4, **characterized in that** the hearing module (3) comprises a substantially cylindrical housing on which the projection (5) is arranged asymmetrically relative to the longitudinal axis of the cylinder.

6. Listening aid device according to one of the claims 1 to 5, **characterized in that** the position of the hearing module is adjustable on the spectacle frame.

7. Listening aid device according to claim 5 and 6, **characterized in that** the hearing module is rotatable around its longitudinal axis.

8. Listening aid device according to one of the claims 1 to 7, **characterized in that** the hearing module is set to a fixed amplification, preferably in the range of 10 to 20 db.

9. Listening aid device according to one of the claims 1 to 8, **characterized in that** the hearing module comprises a substantially language-specific frequency characteristic and a linear dynamic.

10. Method of manufacturing a listening aid device, **characterized in that** a hearing module containing a microphone, an amplifier and a transducer is arranged at the frame temple or a frame temple part of a spectacle frame in such a manner that it forms a support of the temple or temple part in the ear, whereby the hearing module has a housing projection that is not individually custom-made and which projects into the auditory channel, not entirely closing the same off acoustically, and **in that** the temple or the temple part is mounted on a lens frame provided with lenses or adapted to receive lenses, or **in that** the temple part is mounted to a second temple part arranged at the lens frame, whereby the temple (7, 8) or the temple part is provided with a first portion (10, 11) extending from the lens frame (9) substantially rectilinearly backwards and with a second portion (12, 13) angled downwards from the first portion and which carries the hearing module (13) at its free end.

11. Temple or temple part for practicing the method according to claim 10, **characterized by** a hearing module containing a microphone, an amplifier and an acoustics transducer arranged at the temple or temple part and which is designed to support the temple in the ear and is provided with a housing projection adapted to project into the auditory channel, whereby the temple (7, 8) or the temple part is provided with a first portion (10, 11) extending from the frame of the lenses substantially rectilinearly backwards, and a second portion (12, 13) angled downwards from the first portion and which carries the hearing module (3) at its free end.

## Revendications

1. Aide auditive (1) avec au moins un module acoustique (3) disposé sur une monture de lunette (2) et dans lequel son montés un microphone, un amplificateur et un convertisseur transformant les signaux amplifiés du microphone en signaux acoustiques, **caractérisée en ce que** le module acoustique est conformé de manière à former un support des lunettes dans l'oreille, et qu'il comporte un appendice (5) de son boîtier non confectionné individuellement qui s'engage dans le conduit auditif sans le clore acoustiquement de façon complète, cet appendice comportant une ouverture de sortie acoustique (6), et **en ce que** la monture de lunette (2) comprend au moins une branche (7,8) avec une première partie (10,11) s'étendant de façon essentiellement rectiligne vers l'arrière à partir de la monture (9) des verres, ainsi qu'une seconde partie (12,13) coudé vers le bas à partir de la première partie et supportant le module acoustique (3) à son extrémité libre.

2. Aide auditive (1) selon la revendication 1, **caractérisée en ce que** l'appendice (5) est au moins partiellement conique.

3. Aide auditive (1) selon une des revendications 1 ou 2, **caractérisée en ce que** le module acoustique comporte un moyen, en particulier un canal (18), pour assurer une connection acoustique directe jusque dans l'oreille.

4. Aide auditive (1) selon une des revendications 1 à 3, **caractérisée en ce que** la monture de lunette comporte des branches (7,8) de longueur ajustable.

5. Aide auditive (1) selon une des revendications 1 à 4, **caractérisée en ce que** le module acoustique (3) comporte un boîtier essentiellement cylindrique sur lequel l'appendice (5) est disposé de façon asymétrique par rapport à l'axe du cylindre.

6. Aide auditive (1) selon une des revendications 1 à 5, **caractérisée en ce que** le module acoustique est monté de façon déplaçable sur la monture de lunette.

7. Aide auditive (1) selon les revendications 5 et 6, **caractérisée en ce que** le module acoustique peut tourner autour de son axe longitudinal.

8. Aide auditive (1) selon les revendications 1 à 7, **caractérisée en ce que** le module acoustique produit une amplification réglée de manière fixe, de préférence dans la plage allant de 10 à 20 db.

9. Aide auditive (1) selon les revendications 1 à 8, **caractérisée en ce que** le module acoustique possède une réponse électro-acoustique essentiellement adaptée à la parole et une dynamique linéaire.

10. Procédé pour la fabrication d'une aide acoustique, **caractérisé en ce qu'**on dispose un module acoustique, dans lequel sont montés un microphone, un amplificateur et un convertisseur acoustique, sur la branche ou sur une partie de la branche d'une monture de lunette de manière à ce qu'il forme le support de la branche ou de la partie de branche dans l'oreille, le boîtier du module acoustique présentant un appendice non confectionné individuellement qui s'étend dans le conduit auditif sans totalement clore celui-ci acoustiquement, **en ce que** la branche ou partie de branche est fixée sur une monture sertissant des verres de lunette ou prévue pour sertir des verres de lunette, ou **en ce que** la partie de branche est attachée fixée à la monture sertissant les verres, la branche (7,8) ou partie de branche comportant une première section (10,11) s'étendant de façon essentiellement rectiligne vers l'arrière à partir de la monture des verres (9), ainsi qu'une seconde section (12,13) coudée vers le bras à partir de la première section et supportant le module acoustique (3) à son extrémité libre.

11. Branche ou partie de branche pour la réalisation de procédé selon la revendication 10, **caractérisé par** un module acoustique contenant un microphone, un amplificateur et un convertisseur acoustique et fixé sur la branche ou partie de branche, le module étant conformé pour supporter la branche dans l'oreille et comprenant un appendice de son boîtier formé pour être introduit dans le conduit acoustique, la branche (7,8) ou partie de branche comportant une première section (10,11) s'étendant de façon essentiellement rectiligne vers l'arrière à partir de la monture (9) des verres ainsi qu'une seconde section (12,13) coudée vers le bas à partir de la première section et supportant le module acoustique (3) à son extrémité libre.
